Europäisches Patentamt

European Patent Office

Office européen des brevets

(11) Publication number: **0 452 306 B1**

# EUROPEAN PATENT SPECIFICATION

(45) Date of publication of patent specification: **30.11.94** (51) Int. Cl.5: **C08L 77/00**

(21) Application number: **89901785.9**

(22) Date of filing: **04.01.89**

(86) International application number:
**PCT/US89/00004**

(87) International publication number:
**WO 90/07555 (12.07.90 90/16)**

(54) **Nylon compositions adequate for blow molding.**

(43) Date of publication of application:
**23.10.91 Bulletin 91/43**

(45) Publication of the grant of the patent:
**30.11.94 Bulletin 94/48**

(84) Designated Contracting States:
**AT BE CH DE FR GB IT LI LU NL SE**

(56) References cited:
**JP-A-60 152 544**
**US-A- 3 845 163**
**US-A- 4 532 100**
**US-A- 4 554 320**
**US-A- 4 804 703**

(73) Proprietor: **E.I. DU PONT DE NEMOURS AND COMPANY**
**1007 Market Street**
**Wilmington Delaware 19898 (US)**

(72) Inventor: **SUBRAMANIAN, Pallatheri, Manackal**
**2710 Tanager Drive**
**Wilmington, DE 19808 (US)**

(74) Representative: **Abitz, Walter, Dr.-Ing. et al**
**Patentanwälte Abitz & Partner**
**Postfach 86 01 09**
**D-81628 München (DE)**

**Description**

Polyamides that are semicrystalline are used extensively in many applications that require good solvent resistance and good properties at elevated temperatures. They are ordinarily processed by injection molding, but there are many components of automobiles and other systems wherein such parts are hollow and to manufacture these by injection molding is very difficult and expensive. Many such parts can conceivably be made by blowmolding provided the polymer system has adequate melt strength and viscosity. Unfortunately, polyamides commonly used for injection molding have number average molecular weights generally between 10000 and 25000 which is too low to make then suitable for extrusion blowmolding. It would be desirable to have a blow moldable polyamide composition made from the usual injection moldable polyamides.

For many applications polyamide compositions with improved toughness are required. The prior art describes various techniques of modifying polyamides with tougheners. Such tougheners include low modulus ethylene copolymers containing small amounts of carboxyl or anhydride functionality. Other tougheners include ethylene acid copolymers neutralized with metal cations (see Epstein US-A-4 174 358 or Murch US-A-3 845 163). Combinations of polyamides with such tougheners afford unique combinations that are tough and suitable for injection molding and extrusions. These combinations, however, possess lower than optimum viscosities and melt strength for use in blowmolding.

Recently, in a companion patent application, (EP-A-0 452 305) the melt viscosities of such combinations of polyamides and the aforementioned toughening polymers are increased substantially by addition of small amounts of an anhydride rich polymer which acts as a coupling or crosslinking agent to react preferentially with the polyamide to increase molecular weight. At the same time such anhydride-rich polymers react with the acid groups in the toughening polymer as well, increasing its viscosity. Thus, addition of the anhydride-rich polymer makes the semicrystalline polyamide readily processible by extrusion blowmolding to make hollow, stiff parts of various shapes.

It has now been found that if a fibrillar polytetrafluoroethylene is added the amount of the anhydride-rich copolymer or the toughening polymer can be reduced.

The compositions consist essentially of:

a) 99-65 parts by weight semicrystalline polyamide having a number average molecular weight between 10000 and 25000;

b) 1-30 parts by weight of either:

1) an ionic copolymer of at least one $\alpha$-olefin and at least one $\alpha,\beta$-unsaturated organic carboxylic acid which is partially or completely neutralized with a metal cation or,

2) a mixture of a polyethylene and a functionalized polyethylene that contains up to 10% by weight carboxylic acid or anhydride functional moieties, wherein the ratio of polyethylene to functionalized polyethylene is between 1:1 and 2:1 by weight;

c) 0.1 to 3 parts by weight of an anhydride-rich copolymer containing alternating units of maleic anhydride and an $\alpha$-olefin, said $\alpha$-olefin being selected from the group consisting of styrene, ethylene, and octadecene, which copolymer contains at least 15% by weight anhydride units; and

d) 0.1 to 3 parts by weight of fibrillar polytetrafluoroethylene.

Of course, the amounts of each additive present are relative. For example, as the amount of component b) is decreased, the amount of component c) should be increased, and as more component b) is employed, the amount of c) can be decreased. The same principle is true for component d).

These compositions have high melt strength compared to the base polyamide. This property aids in making the compositions blow-moldable. The compositions are readily processible by extrusion blowmolding to make hollow parts, such as containers or automotive components for under-the-hood applications.

The polyamide matrix resin of the compositions of this invention is well known in the art and embraces those semi-crystalline resins having a molecular weight of between about 10000 and 25000 and commonly referred to as nylons. Suitable polyamides include those described in US-A-2 071 250; US-A-2 071 251; US-A-2 130 523; US-A-2 130 948; US-A-2 241 322; US-A-2 312 966; US-A-2 512 606; and US-A-3 393 210. The polyamide resin can be produced by condensation of equimolar amounts of a saturated dicarboxylic acid containing from 4 to 12 carbon atoms with a diamine, in which the diamine contains from 4 to 14 carbon atoms. Excess diamine can be employed to provide an excess of amine end groups over carboxyl end groups in the polyamide. Examples of polyamides include polyhexamethylene adipamide (66 nylon), polyhexamethylene azelaamide (69 nylon), polyhexamethylene sebacamide (610 nylon), and polyhexamethylene dodecanoamide (612 nylon), the polyamide produced by ring opening of lactams; i.e., polycaprolactam, polylauric lactam, poly-11-aminoundecanoic acid, bis(paraaminocyclohexyl) methane dodecanoamide. It is also possible to use in this invention polyamides prepared by the copolymerization of two of the above polymers or terpolymerization of the above polymers or their components; e.g., an adipic, isophthalic acid hexamethylene diamine copolymer. Preferable the polyamides are linear with a melting point in excess of 200°C. As great as 99 percent by weight of the composition can be composed of polyamide; and the compositions contain from 65 to 99 percent, and more narrowly 80 to 95 percent, by weight of polyamide. By "semicrystalline" is meant that the polyamide has a distinct melting point with a measurable heat of fusion, as described in US-A-4 410 661 in Columns 1 and 2.

The ionic copolymer is made of recurring units of at least one alpha-olefin and at least one alpha,beta-unsaturated carboxylic acid, in which the acid moiety is at least partially ionized with metal ions. The alpha-olefin is preferably of 2-6 carbon atoms and the acid is preferably of 3-6 carbon atoms. Preferably the alpha-olefin is ethylene and the acid is acrylic or methacrylic acid. Other polymerizable comonomers can be present, such as acrylates or methacrylates. The metal ion can be monovalent, divalent or trivalent, as for example Na, Zn, Al, or K. Representative copolymers include ethylene/isobutylacrylate/methacrylic acid (80/10/10) 70% zinc neutralized.

When unmodified polyethylene is used, an anhydride modified polyethylene (modified with 1% maleic anhydride) is used as a compatibilizer. The polyethylene used can be high or low density. The functionalized polyethylene can be a polyethylene that contains up to 10% carboxylic acid or anhydride functionality. These ore described in Epstein US-A-4 174 358. The ratio of polyethylene to functionalized polyethylene is 1:1 to 2:1 by weight.

Small amounts of an anhydride-rich polymer comprise the third additive component. This component is an alternating polymer of styrene and maleic anhydride (e.g., SMA® 3000 sold by ARCO Chemical), an alternating polymer of ethylene and maleic anhydride (e.g., ethylene-maleic anhydride polymer EMA-31 manufactured by Monsanto Chemical Company), or a octadecene/maleic anhydride polymer (e.g., Octadecene-maleic anhydride polymer PA-18 made by Gulf oil Company). By alternating is meant that the units substantially alternate between comonomers.

The fibrillar polytetrafluoroethylene is preferably a non-melt-fabricable tetrafluoroethylene polymer. The tetrafluoroethylene polymers are made by the dispersion polymerization process, in which the polymer particles formed remain dispersed in the reaction mix during the polymerization. The particles are coagulated and dried. The particles fibrillate while being physically mixed into the composition of the invention.

The fibrillatable PTFE is a well known material in the art and readily available as a commercial product. The commercially available fibrillatable PTFE is in the form of an aqueous dispersion prepared by the emulsion polymerization or in the form of a powder obtained by separation of the resin from the aqueous dispersion followed by drying. The aqueous dispersion of the fibrillatable PTFE contains usually several tens of %, say, up to 60% of the PTFE particles having a diameter of about 0.2 $\mu$m while the powdery products are agglomerates of these particles of about 0.5 mm average diameter. The PTFE particles of either form can be readily converted into fibrils when the particles are subjected to mechanical shearing forces.

Several of the examples of the commercially available fibrillatable PTFE are as follows: Teflon® 6J (a product by Mitsui Fluorochemical Co.), Teflon® 6JC (a product by the same company), Polyflon F-103 (a product of Daikin Kogyo Co.) and Polyflon F-201 (a product by the same company as the examples of the powdery products and Teflon® 30-J (a product by Mitsui Fluorochemical Co.) and Polyflons D-1 and D-2 (products by Diakin Kogyo Co.) as the examples of the aqueous dispersion products.

It has unexpectedly been discovered that if the amounts of additive ingredients are such that certain low shear/high shear viscosity ratios are obtained, good blowmolding resins are produced. For example, when the viscosity is measured at a shear rate of 3.5 per seconds and at a shear rate of 588 per second, it was found that if the ratio of low shear viscosity to high shear viscosity was greater than about 5 or 6 or so, the compositions could be extrusion blowmolded.

The ingredients used to make the compositions of the invention may be combined by tumble blending the components and feeding the blend to the extruder of the blowmolding equipment. It is preferable, however, that the anhydride-rich copolymer be dispersed uniformly and it has been found that melt blending the ingredients, by using such equipment as a melt extruder (e.g., single screw extruders or twin screw extruders) is preferred. The blended product is pelletized (i.e., the extruded strand is cut), dried and used for subsequent blowmolding purposes using an extrusion blowmolding machine (e.g., made by Rocheleau Inc., Hayssen Inc.) and fabricated into hollow articles such as containers.

## EXAMPLES

The examples set forth below were carried out using as the polyamide a 66 polyamide "Zytel"® (16,000 - 20,000 number average molecular weight) made from adipic acid and hexamethylene diamine. The ionomeric polyolefin additive was a 70% zinc neutralized ethylene-methacrylic acid (90/10) copolymer ("Surlyn"® 9520).

Anhydride-Rich Copolymers used were:

SMA®-3000, Styrene-Maleic anhydride copolymer by ARCO Chemical

PA-18, Octadecene-Maleic anhydride copolymers made by Gulf oil Co. (Chemicals Div.)

The fluoropolymer used was Teflon® fluoropolymer 6C or 60 sold by the Du Pont Company.

Number average molecular weight was determined by Waters 150C gel permeation chromatography equipment at 110°C with meta-cresol as a solvent.

Melt viscosity was measured on a melt capillary rheometer made by Kayeness Test Instrument. Melt flow was measured using a melt index apparatus made by F. F. Sloan Corporation, Wilmington, Delaware.

The materials were extrusion blended using a Sterling extruder equipped with a single screw or a Werner & Pfleiderer twin screw extruder and the polymer strands cut into pellets, dried and used to blow mold 0.95 ℓ (one quart) containers using a Rocheleau extrusion blowmolding machine.

## Blowmolding Procedure

The appropriate mixture of materials were blended and melt extruded using an extruder equipped with a 5.08 cm (2 inch) screw and the polymer melt made into strands and cut into small pellets.

The pellets then were fed into a blowmolding machine which was equipped with a 3.81 cm (1-1/2 inch) diameter screw and a mold to make a bottle with a volume of 0.95 ℓ (1 quart). The extruder temperatures were kept at about 270°C. The vertically extruded tube of the melt (parison) was qualitatively Judged for its strength by stopping the extrusion and the molten parison allowed to stand and support its own weight, before pinching and blowing to make the container. If the parison does not have adequate strength, the parison breaks off easily and the melt falls down without being able to blow and make the container. If it has good strength, the molten tube (parison) supports itself without breaking and lends itself to blowing to make the container.

## Control Example 1

Using 90 parts of 66 polyamide and 10 parts ionomeric copolymer, the extruded melt did not have enough strength to support itself, broke off and fell down rapidly. No containers could be blowmolded.

## Control Example 2

Adding 0.5 parts anhydride-rich copolymer to the mixture of control Example 1 did help, but not enough to make a satisfactory container.

The composition of Control Example 2 (88.5 parts polyamide and 10 parts ionomeric copolymer and 0.5 anhydride-rich copolymer)was melt blended with 1 part of fluoropolymer Teflon® 6C. On blowmolding as described above, good blowmolded containers were obtained.

Table I shows the ingredients used and blowmoldability results for Control Examples 1 and 2 amd for Example 1.

In a like manner, additional Examples and Controls were carried out using the ingredients shown in Table I with the blowmolding results shown in the Table.

## TABLE I
### EFFECT OF HIGH MOLECULAR WEIGHT "TEFLON"® ON THE MELT VISCOSITIES @ 285°C AND BLOW MOLDABILITY OF POLYHEXAMETHYLENE ADIPAMIDE BLENDS

| EXP.# | POLYAMIDE | POLYANHYDRIDE SMA 3000 | PA 18 | IONOMERIC COPOLYMER | FLUOROPOLYMER PTFE 6C | 60 | VISC. @ 3.5 PER SEC | @ 588 PER SEC | VISC. RATIO @ 3.5 SEC/588 /SEC | BLOWMOLDABILITY |
|---|---|---|---|---|---|---|---|---|---|---|
| Cont. Exp 1 | 90 | | | 10 | | | 299 | 160 | 1.87 | NO MELT STRENGTH |
| Cont. Exp 2 | 89.5 | 0.5 | | 10 | | | 956 | 267 | 3.58 | NOT ENOUGH MELT STRENGTH |
| Exp 1 | 88.5 | 0.5 | | 10 | 1 | | 2721 | 340 | 8.00 | GOOD, COULD BE BLOWMOLDED |
| Exp 2 | 89 | 0.5 | | 10 | — | 0.5 | 2661 | 338 | 7.87 | " |
| Exp 3 | 88.5 | 0.5 | | 10 | — | 1.0 | 2900 | 359 | 8.08 | " |
| Cont. Exp 3 | 80 | | | 20 | | | 239 | 187 | 1.28 | NO MELT STRENGTH COULD NOT BE BLOWMOLDED |
| Exp 4 | 78.5 | 0.5 | | 20 | 1 | | 4963 | 370 | 13.41 | BLOWSMOLDS READILY |
| Exp 5 | 78.5 | 0.5 | | 20 | | 1 | 6040 | 439 | 13.78 | BLOWMOLDS WELL |
| Exp 6 | 79 | 1.0 | | 20 | | | 9090 | 526 | 17.28 | BLOWMOLDS WELL |
| Exp 7 | 78 | 1.0 | | 20 | | 1 | 9658 | 528 | 18.23 | BLOWMOLDS WELL |
| Exp 8 | 79 | | 1 | 20 | | | 6309 | 412 | 15.31 | BLOWMOLDS WELL |
| Exp 9 | 78 | | 1 | 20 | | 1 | 6608 | 463 | 14.27 | BLOWMOLDS WELL |

Claims

1. A composition consisting essentially of:

a) 99-65 parts by weight semicrystalline polyamide having a number average molecular weight between 10000 and 25000;

b) 1-30 parts by weight based on polyamide of either:

1) an ionic copolymer of at least one $\alpha$-olefin and at least one $\alpha,\beta$-unsaturated organic carboxylic acid which is partially or completely neutralized with a metal cation or,

2) a mixture of a polyethylene and a functionalized polyethylene that contains up to 10% by weight carboxylic acid or anhydride functional moieties, wherein the ratio of polyethylene to functionalized polyethylene is between 1:1 and 2:1 by weight;

c) 0.1 to 3 parts by weight of an anhydride-rich copolymer containing alternating units of maleic anhydride and an $\alpha$-olefin, said $\alpha$-olefin being selected from the group consisting of styrene, ethylene, and octadecene, which copolymer contains at least 15% by weight anhydride units; and

d) 0.1 to 3 parts by weight of fibrillar polytetrafluoroethylene.

2. The composition of Claim 1 wherein the polyamide is 66 nylon.

3. The composition of Claim 1 or 2 wherein component (b) is an ionic copolymer of at least one alpha-olefin and at least one alpha,beta-unsaturated organic carboxylic acid, in which the acid moiety is partially neutralized with a metal cation.

**Patentansprüche**

1. Eine Zusammensetzung, die im wesentlichen besteht aus:

a) 99-65 Gewichtsteilen semikristallines Polyamid mit einem Zahlenmittel-Molekulargewicht zwischen 10000 und 25000,

b) 1-30 Gewichtsteilen, basierend auf Polyamid, entweder:

1) eines ionischen Copolymeren aus mindestens einem $\alpha$-Olefin und mindestens einer $\alpha,\beta$-ungesättigten organischen Carbonsäure, die teilweise oder vollständig mit einem Metallkation neutralisiert ist, oder

2) einer Mischung eines Polyethylens und eines funktionalisierten Polyethylens, das bis zu 10 Gew.-% funktionelle Carbonsäure- oder Anhydridreste enthält, worin das Gewichtsverhältnis von Polyethylen zu funktionalisiertem Polyethylen zwischen 1:1 und 2:1 ist,

c) 0,1 bis 3 Gewichtsteilen eines anhydridreichen Copolymeren, das alternierende Einheiten von Maleinsäureanhydrid und einem $\alpha$-Olefin enthält, wobei das $\alpha$-Olefin ausgewählt ist aus der Gruppe, bestehend aus Styrol, Ethylen und Octadecen, wobei das Copolymer mindestens 15 Gew.-% Anhydrideinheiten enthält, und

d) 0,1 bis 3 Gewichtsteilen fibrillares Polytetrafluoroethylen.

2. Die Zusammensetzung nach Anspruch 1, worin das Polyamid Nylon 66 ist.

3. Die zusammensetzung nach Anspruch 1 oder 2, worin Komponente (b) ein ionisches Copolymer aus mindestens einem alpha-Olefin und mindestens einer alpha,beta-ungesättigten organischen Carbonsäure ist, worin der Säurerest teilweise mit einem Metallkation neutralisiert ist.

**Revendications**

1. Une composition constituée essentiellement de :

a) 99 à 65 parties en poids d'un polyamide semicristallin ayant un poids moléculaire moyen en nombre compris entre 10 000 et 25 000 ;

b) 1 à 30 parties en poids, par rapport au polyamide, soit

1) d'un copolymère ionique d'au moins une $\alpha$-oléfine et d'au moins un acide carboxylique organique insaturé en $\alpha,\beta$ qui est partiellement ou totalement neutralisé par un cation métallique, soit

2) d'un mélange d'un polyéthylène et d'un polyéthylène fonctionnalisé qui contient jusqu'à 10 % en poids de fragments fonctionnels anhydride ou acide carboxylique, dans lequel le rapport du polyéthylène au polyéthylène fonctionnalisé est compris entre 1:1 et 2:1 en poids ; et

c) 0,1 à 3 parties en poids d'un copolymère riche en anhydride contenant des motifs alternés d'anhydride maléique et d'une alpha-oléfine, ladite alpha-oléfine étant choisie dans le groupe formé par le styrène, l'éthylène et l'octadécène, lequel copolymère contient au moins 15 % en poids de motifs anhydride ; et

d) 0,1 à 3 parties en poids de polytétrafluoréthylène fibrillaire.

2. La composition de la revendication 1, dans laquelle le polyamide est le nylon 6-6.

3. La composition de la revendication 1 ou 2, dans laquelle le composant (b) est un copolymère ionique d'au moins une alpha-oléfine et d'au moins un acide carboxylique organique insaturé en alpha,bêta, dans lequel le fragment acide est partiellement neutralisé par un cation métallique.